# EUROPEAN PATENT SPECIFICATION

(11) **EP 4 530 491 B1**
(45) Date of publication and mention of the grant of the patent: **24.12.2025**
(21) Application number: 24178896.7
(22) Date of filing: 29.05.2024
(51) Int. Cl.: F16D 65/00

(54) **DISC BRAKE ASSEMBLY PARTICULATE COLLECTION SYSTEM**
PARTIKELSAMMELSYSTEM FÜR SCHEIBENBREMSENANORDNUNG
SYSTÈME DE COLLECTE DE PARTICULES D'ENSEMBLE FREIN À DISQUE

(30) Priority: 07.06.2023 GB 202308489
(43) Date of publication of application: 02.04.2025
(73) Proprietor: Ogab Ltd, Bridgwater TA6 4AW (GB)
(72) Inventor: Elogab, Osama, Taunton, TA3 5QT (GB); Elogab, Nadia, Taunton, TA3 5QT (GB)
(74) Representative: Handsome I.P. Ltd

(56) References cited:
- EP-B1- 2 663 784
- CN-A- 111 271 394
- DE-A1- 102018 004 895
- US-B2- 8 025 132

## Description

The present invention relates generally to a disc brake assembly particulate collection system and a method of collecting particulates from a disc brake assembly and finds particular, although not exclusive, utility in automotive and aeronautical braking systems.

It is known to want to collect particulate matter created during braking by systems such as disc brake assemblies. Conventional techniques involve the use of a fan to suck air-borne particulates from around such disc brake assemblies. However, in vehicles moving at relatively high speed, air movement around a brake assembly due to the passage of ambient air past, radically decreases the efficiency of such systems, as much of the particulates are lost before they can be 'vacuumed-up'.

In non-disc-brake applications, it might be expected to surround the particulate source with a vessel to prevent the particulates from being lost. However, it is conventional wisdom that this would risk overheating of the particulate source, by virtue of their primary means of cooling being prevented; namely the passage of air thereover.

The action of braking generates massive amounts of heat, and brake components have a temperature window within which they can operate effectively; their performance degrades drastically when they exceed their maximum temperature ratings.

Brake rotors (i.e. brake discs) are usually designed to dissipate heat. Metal brake discs, such as those made from iron or steel, absorb heat energy by conduction into a core disc material. The heat energy is rejected over a period of time into the atmosphere by convection, via flow of air across an exposed surface of the core disc material. With other braking technologies, the method of heat rejection may be different; for example carbon and carbon-ceramic coated discs have different degrees of radiated heat and conducted heat transfer to the disc core depending on the energy input and design. In the case of radiated heat, the cooling effect of the device may target specific cooling optimisation. For example, a carbon disc may have a specific target temperature at which maximum effective brake torque is generated. The resultant heat will determine the coefficient of friction of the friction pair(s), and heat in excess of the optimum temperature will result in accelerated wear of the friction pair(s) and thereby increase production of brake particulate.

In addition, rotation of the brake disc may cause a boundary layer to form adjacent to the surface of the disc. A boundary layer is a layer of substantially stationary air immediately surrounding a moving object. This boundary layer may act as a barrier between the surface of the brake disc and the air being passed over it, thereby limiting the cooling of the brake disc by reducing effective heat transfer between the brake disc surface and the air passing over it.

EP2663784B1 describes a cooling and particulate filtering system for a disc brake assembly wherein a system of air inlets and outlets and internal passages within the brake disc itself create an airflow through the system when the brake disc is rotated. CN111271394A and US8025132B2 both describe systems for collecting disc brake dust from a region around a part of the brake disc. DE102018004895A1 describes a system for collecting brake dust from a drum brake assembly.

According to the present invention as in claim 1, there is provided a disc brake assembly particulate collection system, comprising: a disc brake assembly; a vessel surrounding the disc brake assembly, the vessel comprising an inlet and an outlet; a first fan configured to introduce air into the vessel via the inlet; and a second fan configured to draw air out of the vessel via the outlet, wherein the second fan comprises a bladeless fan.

In this way, a first fan may actively introduce air into a vessel surrounding the disc brake assembly to replace that air that would otherwise by naturally incident, thereby simultaneously preventing loss of particulates to the surrounding environment before they have the chance to be vacuumed-up by the second fan and enabling adequate cooling of the disc brake assembly. In fact, the first fan can actually introduce a higher volume of air and thereby provide more effective cooling. The particulate may be suspended, cooled and transported in the air. The particulate may be evacuated from the vessel and provided into a separation system. The separation system may allow air to be expelled while retaining particulate in a storage vessel.

The disc brake assembly may comprise a friction pair, that is the rotor and stator components of a disk brake system. A friction pair may comprise more than two components. The disc brake assembly may comprise a disc (or rotor) and a calliper arranged to squeeze against the disc to create friction, thereby slowing any rotation of the disc, or holding the disc stationary. The calliper may comprise a pair of pads for engaging with the disc. The calliper may comprise multiple friction interfaces for engaging with the disc.

The disc brake assembly may be mounted on a vehicle, such that the disc is coaxially mounted on an axle, and the calliper is mounted on a body of the vehicle.

The vessel may comprise a sealed unit, which may substantially limit passage of particulate matter therefrom. The vessel may be substantially rigid. The vessel may be substantially air-tight. Substantially air-tight may mean sufficiently sealed to allow an optimal flow of ait to be exhausted from the vessel.

Surrounding the disc brake assembly may comprise the disc brake assembly being located within the vessel. The vessel may be provided with passage(s) through which the axle may extend, such that the axle may extend out of the vessel. The passage(s) may be provided with a mechanical seal (e.g. an end-face mechanical seal, a radial shaft seals, lip seals, or other suitable seal). An interior of the vessel may be maintained at a lower pressure than an exterior of the vessel, thereby containing the particulate therein.

The inlet may comprise a first opening in the vessel, which may be provided with a means to connect a hose, pipe or other passage thereto, for instance for onward connection to the first fan.

The outlet may comprise a second opening in the vessel, which may be provided with a means to connect a hose, pipe or other passage thereto, for instance for onward connection to the second fan.

The first fan may comprise a first bladeless fan or any other suitable type of fan.

A first compressor configured to produce a first compressed stream of gas may be provided, and the first bladeless fan may be arranged to receive the first compressed stream of gas and eject the first compressed stream of gas over a first Coand 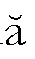 surface, the first bladeless fan configured to entrain ambient air from a first fan inlet with the ejected first compressed stream of gas to produce a first amplified stream of gas.

The first compressor may merely comprise an inlet arranged to collect air from the front of the vehicle so that ram pressure of a vehicle's movement will provide high pressure air. Alternatively or additionally, the first compressor may comprise a pump (e.g. an air pump) to supply air. The pump may be electrically driven, which may prove advantageous for light-weight applications. Alternatively or additionally, the pump may be mechanically driven. In particular the pump may be mechanically linked to the vehicle's crank shaft and/or rotor blades, for example to optimise usage of internal space. Alternatively, the pump may be mechanically linked to the vehicle' wheel(s) such that motion of the wheel drives the pump. This enables more convenient retro-fitting, and is not hindered by the fact that the pump only operates when the wheel's are moving. Motion of the wheel may drive the pump by simple mechanical means (such as gearing), or may be mediated by additional electrical means (such as a dynamo). However, in preferred embodiments, the pump may be driven by exhaust driven devices. That is, exhaust gases may drive device that in turn is used to drive the pump for providing high pressure air into the inlet. One example of such an exhaust driven device is a turbo.

The system may further comprise a controller configured to control supply of the first compressed stream of air.

The system may further comprise a temperature sensor configured to monitor a temperature of the brake disc and the controller may be configured to control supply of the first compressed stream of air in response thereto.

The system may further comprise a braking sensor configured to monitor vehicle braking, and the controller may be configured to control supply of the first compressed stream of air in response thereto. In this way, the braking sensor and controller may control the brake duct system to cool the brake system during braking.

The first compressor may comprise a pump, for instance an air pump. The first compressed stream of gas may comprise a first compressed stream of air. The first compressed stream of gas may be above ambient pressure.

The first bladeless fan may comprise an air amplifier. The first bladeless fan may comprise a first device which use a first amount of compressed air to generate a second flow of air larger than the first amount. The first bladeless fan may operate by taking advantage of an aerodynamic effect known as "the Coand 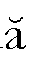 effect". The Coand 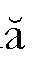 surface may be a curved surface. The first bladeless fan may increase airflow. The increase in airflow may be by up to 40 times, in particular a factor of between 5 and 18 times.

The first bladeless fan may take the first stream of gas and eject it though a first compressed air outlet adjacent to a first "Coand 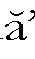 " surface, thereby entraining surrounding air. In particular, the first compressed air outlet may be configured to eject the gas substantially over the first Coand 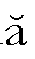 surface.

The first Coand 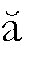 surface may be located around an internal perimeter of the inlet. In particular, the first Coand 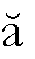 surface may form a closed loop around an internal perimeter of the inlet. Similarly, the first compressed air outlet may be located around an internal perimeter of the inlet. In particular, the air first compressed air outlet may form a closed loop around the internal perimeter of the inlet. The first compressed air outlet may comprise a ring nozzle. Alternatively or additionally, the first compressed air outlet may comprise a series of nozzle type devices.

The first compressed stream of gas may have a pressure above atmospheric pressure. The first compressed stream of gas may have a pressure and/or flow rate dependent on the requirements of downstream elements, materials and/or control system functions. The first compressed stream of gas may have a pressure of between 1bar and 4bar, in particular between 2bar and 3bar, more particularly approximately 2.5bar.

The first compressed stream of gas may be conveyed to the first bladeless fan via a feed line.

The first compressed stream of gas may have a temperature below ambient. In this way, air being supplied to the first bladeless fan may be more dense than ambient air. However, in alternative arrangements the first compressed stream of gas may have a temperature above ambient, or a temperature that is substantially equal to ambient.

The first amplified stream of gas may be a combination of the first compressed stream of gas and the entrained ambient air.

The first fan may further comprise a screen for filtering the ambient air prior to its entrainment by the first bladeless fan. In this way, damage to the first bladeless fan from grit and/or particulates can be prevented. The screen may comprise a grille and/or mesh.

A second compressor configured to produce a second compressed stream of gas may be provided, and the second bladeless fan may be arranged to receive the second compressed stream of gas and eject the second compressed stream of gas over a second Coand 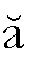 surface, the second bladeless fan configured to entrain ambient air from a second fan inlet with the ejected second compressed stream of gas to produce a second amplified stream of gas.

The second compressor may merely comprise an inlet arranged to collect air from the front of the vehicle so that ram pressure of a vehicle's movement will provide high pressure air. Alternatively or additionally, the second compressor may comprise a pump (e.g. an air pump) to supply air. The pump may provide high pressure air and/or a high flowrate of air to the inlet. The pump may be electrically driven, mechanically driven, pneumatically driven, and/or hydraulically driven. Alternatively or additionally, the pump may be driven by a turbo. That is, exhaust gases may drive a turbo that in turn is used to drive the pump for providing high pressure air into the inlet.

The system may further comprise a controller configured to control supply of the second compressed stream of air.

The system may further comprise a temperature sensor configured to monitor a temperature of the brake disc and the controller may be configured to control supply of the second compressed stream of air in response thereto.

The system may further comprise a braking sensor configured to monitor vehicle braking, and the controller may be configured to control supply of the second compressed stream of air in response thereto. In this way, the braking sensor and controller may control the brake duct system to cool the brake system during braking.

The second compressor may comprise a pump, for instance an air pump. The second compressed stream of gas may comprise a second compressed stream of air. The second compressed stream of gas may be above ambient pressure.

The second bladeless fan may comprise an air amplifier. The second bladeless fan may comprise a second device which use a second amount of compressed air to generate a second flow of air larger than the second amount. The second bladeless fan may operate by taking advantage of an aerodynamic effect known as "the Coand 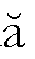 effect". The Coand 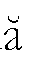 surface may be a curved surface. The second bladeless fan may increase airflow. The increase in airflow may be by up to 40 times, in particular a factor of between 5 and 18 times.

The second bladeless fan may take the second stream of gas and eject it though a second compressed air outlet adjacent to a second "Coand 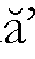 " surface, thereby entraining surrounding air. In particular, the second compressed air outlet may be configured to eject the gas substantially over the second Coand 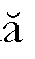 surface.

The second Coand 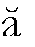 surface may be located around an internal perimeter of the inlet. In particular, the second Coand 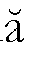 surface may form a closed loop around an internal perimeter of the inlet. Similarly, the second compressed air outlet may be located around an internal perimeter of the inlet. In particular, the air second compressed air outlet may form a closed loop around the internal perimeter of the inlet. The second compressed air outlet may comprise a ring nozzle, and/or another type of nozzle, such as an elliptic or tip ring nozzle.

The second compressed stream of gas may be above ambient pressure. The second compressed stream of gas may have a pressure of between 1bar and 4bar, in particular between 2bar and 3bar, more particularly approximately 2.5bar.

The second compressed stream of gas may be conveyed to the second bladeless fan via a feed line.

The second compressed stream of gas may have a temperature below ambient. In this way, air being supplied to the second bladeless fan may be more dense than ambient air. However, in alternative arrangements the second compressed stream of gas may have a temperature above ambient, or a temperature that is substantially equal to ambient.

The second amplified stream of gas may be a combination of the second compressed stream of gas and the entrained ambient air.

The second fan may further comprise a screen for filtering the ambient air prior to its entrainment by the second bladeless fan. In this way, damage to the second bladeless fan from grit and/or particulates can be prevented. The screen may comprise a grille and/or mesh.

The second fan may form part of a conventional vacuum system (which may be comprised within the present system), and may involve a bag collection system.

The system may form part of a vehicle, such as a car, van, lorry, motorcycle, aircraft, helicopter, or any other similar vehicle.

The disc brake assembly may further comprise a blade, wherein an edge of the blade may be located adjacent to an outer surface of the brake disc. The outer surface of the brake disc may be a surface parallel to a radial plane of the brake disc.

In this way, the blade may act to prevent a boundary layer forming adjacent to the surface of the brake disc when the brake disc is rotating, by effectively "cutting" the layer of substantially stationary air immediately adjacent the surface of the brake disc, and diverting it away from the brake disc. This may enable the air passing over the brake disc to directly contact its surface, thereby increasing the cooling of the brake disc, which may reduce the risk of damage and decreased effectiveness of the brake disc due to high operating temperatures.

The disc brake assembly may be configured to cool the brake disc by the ejection of air onto the portion of the surface of the brake disc adjacent to the blade. In this way, the blade removes the boundary layer adjacent to the surface of the brake disc, and the brake disc assembly ejects air directly onto the surface of the brake disc, such that the disc's heat may be transferred to the air.

The disc brake assembly may comprise a cooling outlet directed towards the portion of the surface of the brake disc adjacent to the blade.

The blade may comprise a planar surface, wherein the plane of this surface is arranged at an angle offset from the outer surface of the brake disc. The angle between the surface of the brake disc and the outer surface may be fixed, or may be adjustable. The angle may be 1 degree, or 90 degrees, or any angle therebetween. For example, the angle may be 10 degrees, 20 degrees, 30 degrees, 40 degrees, 45 degrees, 50 degrees, 60 degrees, 70 degrees, or 80 degrees.

During rotation of the brake disc, the cooling outlet may be configured to blow air onto a portion of the brake disc after it has passed the blade. The air blown from the cooling outlet may be ambient temperature, or below ambient temperature.

The edge of the blade being located adjacent to the surface of the disc brake may mean that the blade edge is proximate to, but does not touch, the surface of the brake disc. For example, the blade may be within 5mm of, or even 1mm of, the surface of the brake disc. Alternatively, the blade may contact the surface of the brake disc.

The blade may be stationary relative to the brake disc. Alternatively, the blade may rotate relative to the brake disc. The blade may be connectable to the inner surface of the vessel. Alternatively, the blade may be connectable to the brake calliper.

The blade may extend in a radial direction relative to the brake disc, or in a direction offset from a radial direction of the brake disc. The blade may extend from the rotational centre of the brake disc to the perimeter of the brake disc. Alternatively, the blade may only extend across a portion of this distance.

The disc brake assembly may comprise a plurality of blades, for example, two, three, four, or more, blades.

According to the present invention as in claim there is provided a method of collecting particulates from a disc brake assembly, the method comprising the steps of: providing the system according to the first aspect; operating the first fan to introduce air into the vessel via the inlet; and operating the second fan to draw air out of the vessel via the outlet.

Also provided is an alternative disc brake assembly comprising a brake disc, and a blade, wherein an edge of the blade is located adjacent to an outer surface of the brake disc. The outer surface of the brake disc may be a surface parallel to a radial plane of the brake disc.

In this way, the blade may act to prevent a boundary layer forming adjacent to the surface of the brake disc when the brake disc is rotating, by effectively "cutting" the layer of substantially stationary air immediately adjacent the surface of the brake disc, and diverting it away from the brake disc. This may enable the air passing over the brake disc to directly contact its surface, thereby increasing the cooling of the brake disc, which may reduce the risk of damage and decreased effectiveness of the brake disc due to high operating temperatures.

The disc brake assembly may be configured to cool the brake disc by the ejection of air onto the portion of the surface of the brake disc adjacent to the blade. In this way, the blade removes the boundary layer adjacent to the surface of the brake disc, and the brake disc assembly ejects air directly onto the surface of the brake disc, such that the disc's heat may be transferred to the air.

The disc brake assembly may comprise a cooling outlet directed towards the portion of the surface of the brake disc adjacent to the blade.

The blade may comprise a planar surface, wherein the plane of this surface is arranged at an angle offset from the outer surface of the brake disc. The angle between the surface of the brake disc and the outer surface may be fixed, or may be adjustable. The angle may be 1 degree, or 90 degrees, or any angle therebetween. For example, the angle may be 10 degrees, 20 degrees, 30 degrees, 40 degrees, 45 degrees, 50 degrees, 60 degrees, 70 degrees, or 80 degrees.

During rotation of the brake disc, the cooling outlet may be configured to blow air onto a portion of the brake disc after it has passed the blade. The air blown from the cooling outlet may be ambient temperature, or below ambient temperature.

The edge of the blade being located adjacent to the surface of the disc brake may mean that the blade edge is proximate to, but does not touch, the surface of the brake disc. For example, the blade may be within 5mm of, or even 1mm of, the surface of the brake disc. Alternatively, the blade may contact the surface of the brake disc.

The blade may be stationary relative to the brake disc. Alternatively, the blade may rotate relative to the brake disc. The blade may be connectable to the inner surface of the vessel described in the first aspect. Alternatively, the blade may be connectable to a brake calliper.

The blade may extend in a radial direction relative to the brake disc, or in a direction offset from a radial direction of the brake disc. The blade may extend from the rotational centre of the brake disc to the perimeter of the brake disc. Alternatively, the blade may only extend across a portion of this distance.

The disc brake assembly may comprise a plurality of blades, for example, two, three, four, or more, blades.

Also provided is an alternative method of cooling a brake disc, the method comprising the steps of providing the above-described alternative disc brake assembly; providing a means for rotating the brake disc, such that a boundary layer is formed adjacent to the surface of the brake disc; removing the boundary layer adjacent to the brake disc via the blade; and enabling air passing over the brake disc to directly contact the surface of the brake disc.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

Figure 1 is a disc brake assembly particulate collection system.

Figure 2 is a side view of a disc brake assembly comprising a blade.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects. Furthermore, the particular features, structures or characteristics of any embodiment or aspect of the invention may be combined in any suitable manner, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention, and form yet further embodiments, as will be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances.

The principles of the invention will now be described by a detailed description of at least one drawing relating to exemplary features of the invention. It is clear that other arrangements can be configured according to the knowledge of persons skilled in the art without departing from the underlying concept or technical teaching of the invention, the invention being limited only by the terms of the appended claims.

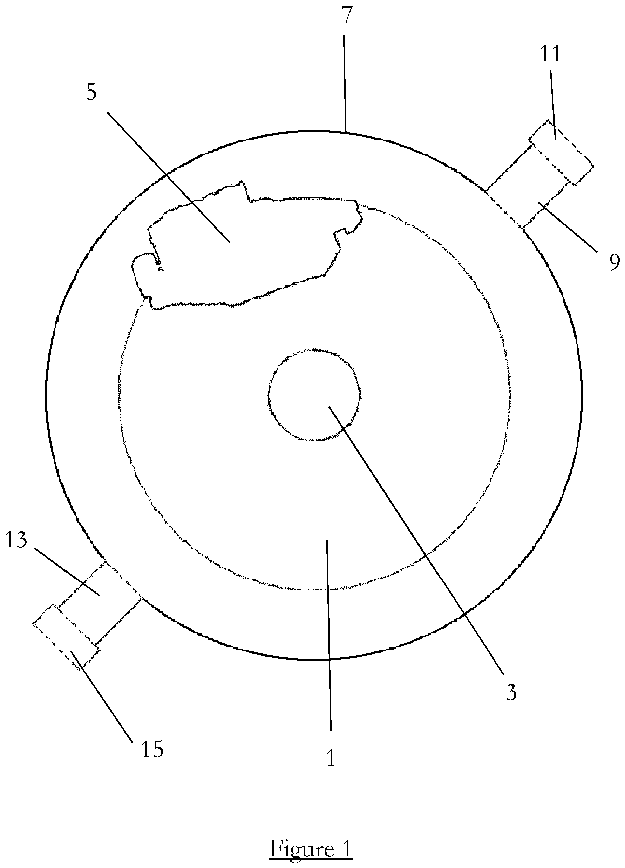

Figure 1 is a disc brake assembly particulate collection system comprising a rotor 1 mounted on an axle 3, and a calliper 5 arranged to squeeze the rotor when activated. A vessel 7 surrounds the features discussed above, and is shown transparent for clarity. In embodiments, the vessel 7 may be transparent or opaque. An inlet 9 is provided at the top-right of the vessel 7 as shown in the figure, and a first fan 11 is provided at the inlet 9 for introduce air into the vessel 7 via the inlet 9. An outlet 13 is provided at the bottom-left of the vessel 7 as shown in the figure, and a second fan 15 is provided at the outlet 13 for drawing air out of the vessel 7 via the outlet 13.

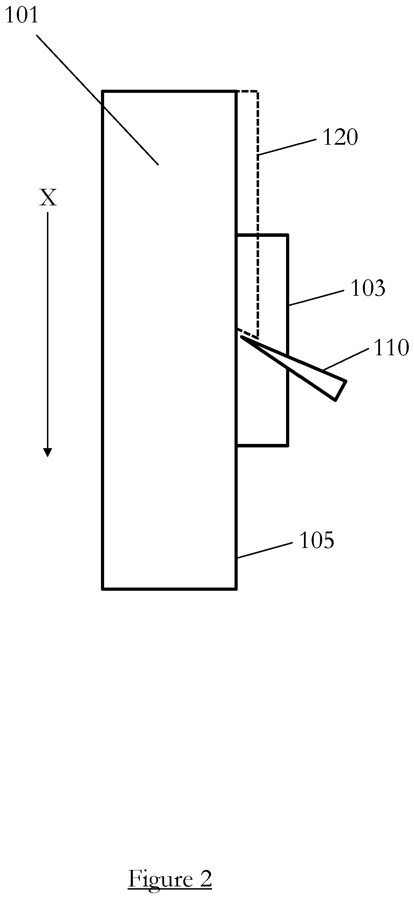

Figure 2 is a side view of a disc brake assembly, seen in a direction perpendicular to the rotational axis of a brake disc 101. The disc brake assembly comprises a brake disc 101 mounted on an axle 103, and a blade 110, wherein an edge of the blade 110 is located adjacent to an outer surface 105 of the brake disc 101. The blade 110 is arranged at angle offset from the outer surface 105 of the brake disc 101. The boundary layer resultant from the rotation of the brake disc is represented by the dashed areas 120, when the brake disc rotates in direction X. In use, the presence of the blade 110 adjacent to the surface 105 of the brake disc 101 removes the boundary layer 120 formed adjacent to the surface 105, as shown by the absence of a dashed area on the other side of the blade 110 to the dashed area 120.

The blade 110 depicted in Figure 2 may be incorporated into the disc brake assembly particulate collection system of Figure 1.

## Claims

1. A disc brake assembly particulate collection system, comprising:
a disc brake assembly;
a vessel (7) surrounding the disc brake assembly, the vessel (7) comprising an inlet (9) and an outlet (13); and
a first fan (11) configured to introduce air into the vessel (7) via the inlet (9);
**characterised by** a second fan (15) configured to draw air out of the vessel (7) via the outlet (13), wherein the second fan (15) comprises a bladeless fan.

2. The disc brake assembly particulate collection system of claim 1, wherein the vessel (7) comprises a sealed unit.

3. The disc brake assembly particulate collection system of claim 1 or claim 2, wherein the first fan (11) comprises a bladeless fan.

4. The disc brake assembly particulate collection system of any preceding claim, further comprising a compressor configured to produce a compressed stream of gas, wherein the bladeless fan is arranged to receive the compressed stream of gas and eject the compressed stream of gas over a Coand 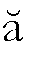 surface, the bladeless fan configured to entrain ambient air from a fan inlet with the ejected compressed stream of gas to produce an amplified stream of gas.

5. The disc brake assembly particulate collection system of claim 4, wherein the compressor merely comprises a compressor inlet arranged to collect air from the front of a vehicle so that ram pressure of a vehicle's movement will provide high pressure air.

6. The disc brake assembly particulate collection system of claim 4 or claim 5, wherein the compressor comprises a pump to supply air.

7. The disc brake assembly particulate collection system of claim 6, wherein the pump is electrically driven, mechanically linked to the vehicle's crank shaft and/or rotor blades, and/or driven by a turbo.

8. The disc brake assembly particulate collection system of any one of claims 4 to 7, further comprising a controller configured to control supply of the compressed stream of air.

9. The disc brake assembly particulate collection system of claim 8, further comprising a temperature sensor configured to monitor a temperature of the brake disc assembly, and wherein the controller is configured to control supply of the compressed stream of air in response thereto.

10. The disc brake assembly particulate collection system of claim 8 or claim 9, further comprising a braking sensor configured to monitor vehicle braking, and wherein the controller is configured to control supply of the first compressed stream of air in response thereto.

11. The disc brake assembly particulate collection system of any one of claims 4 to 10, wherein the compressed stream of gas has a temperature below ambient.

12. The disc brake assembly particulate collection system of any one of claims 4 to 11, wherein the fan further comprises a screen for filtering the ambient air prior to its entrainment by the bladeless fan.

13. A vehicle comprising the system of any preceding claim.

14. A method of collecting particulates from a disc brake assembly, the method comprising the steps of:
providing the system of any one of claims 1 to 12;
operating the first fan (11) to introduce air into the vessel (7) via the inlet (9); and
operating the second fan (15) to draw air out of the vessel (7) via the outlet (13).

## Patentansprüche

1. Ein Partikelsammelsystem für eine Scheibenbremsanordnung, umfassend:
eine Scheibenbremsanordnung;
ein Gehäuse (7), das die Scheibenbremsanordnung umgibt, wobei das Gehäuse (7) einen Einlass (9) und einen Auslass (13) umfasst; und
einen ersten Lüfter (11), der konfiguriert ist, um Luft über den Einlass (9) in das Gehäuse (7) einzuleiten;
**gekennzeichnet durch** einen zweiten Lüfter (15), der konfiguriert ist, um Luft über den Auslass (13) aus dem Gehäuse (7) abzusaugen, wobei der zweite Lüfter (15) einen flügellosen Lüfter umfasst.

2. Das Partikelsammelsystem für eine Scheibenbremsanordnung nach Anspruch 1, wobei das Gehäuse (7) eine abgedichtete Einheit umfasst.

3. Das Partikelsammelsystem für eine Scheibenbremsanordnung nach Anspruch 1 oder Anspruch 2, wobei der erste Lüfter (11) einen flügellosen Lüfter umfasst.

4. Das Partikelsammelsystem für eine Scheibenbremsanordnung nach einem der vorhergehenden Ansprüche, ferner umfassend einen Kompressor, der konfiguriert ist, um einen komprimierten Gasstrom zu erzeugen, wobei der flügellose Lüfter angeordnet ist, um den komprimierten Gasstrom zu empfangen und den komprimierten Gasstrom über eine Coandä-Fläche auszustoßen, wobei der flügellose Lüfter konfiguriert ist, um Umgebungsluft von einem Lüftereinlass mit dem ausgestoßenen komprimierten Gasstrom mitzureißen, um einen verstärkten Gasstrom zu erzeugen.

5. Das Partikelsammelsystem für eine Scheibenbremsanordnung nach Anspruch 4, wobei der Kompressor lediglich einen Kompressoreinlass umfasst, der angeordnet ist, um Luft von der Vorderseite eines Fahrzeugs zu sammeln, so dass der Staudruck der Fahrzeugbewegung Hochdruckluft bereitstellt.

6. Das Partikelsammelsystem für eine Scheibenbremsanordnung nach Anspruch 4 oder Anspruch 5, wobei der Kompressor eine Pumpe zur Zufuhr von Luft umfasst.

7. Das Partikelsammelsystem für eine Scheibenbremsanordnung nach Anspruch 6, wobei die Pumpe elektrisch angetrieben, mechanisch mit der Kurbelwelle und/oder den Rotorblättern des Fahrzeugs gekoppelt und/oder von einem Turbo angetrieben wird.

8. Das Partikelsammelsystem für eine Scheibenbremsanordnung nach einem der Ansprüche 4 bis 7, ferner umfassend eine Steuerung, die konfiguriert ist, um die Zufuhr des komprimierten Luftstroms zu steuern.

9. Das Partikelsammelsystem für eine Scheibenbremsanordnung nach Anspruch 8, ferner umfassend einen Temperatursensor, der konfiguriert ist, um eine Temperatur der Scheibenbremsanordnung zu überwachen, und wobei die Steuerung konfiguriert ist, um die Zufuhr des komprimierten Luftstroms in Reaktion darauf zu steuern.

10. Das Partikelsammelsystem für eine Scheibenbremsanordnung nach Anspruch 8 oder Anspruch 9, ferner umfassend einen Bremssensor, der konfiguriert ist, um das Bremsen des Fahrzeugs zu überwachen, und wobei die Steuerung konfiguriert ist, um die Zufuhr des ersten komprimierten Luftstroms in Reaktion darauf zu steuern.

11. Das Partikelsammelsystem für eine Scheibenbremsanordnung nach einem der Ansprüche 4 bis 10, wobei der komprimierte Gasstrom eine Temperatur unterhalb der Umgebungstemperatur aufweist.

12. Das Partikelsammelsystem für eine Scheibenbremsanordnung nach einem der Ansprüche 4 bis 11, wobei der Lüfter ferner ein Sieb zum Filtern der Umgebungsluft vor ihrem Mitreißen durch den flügellosen Lüfter umfasst.

13. Ein Fahrzeug, umfassend das System nach einem der vorhergehenden Ansprüche.

14. Ein Verfahren zum Sammeln von Partikeln von einer Scheibenbremsanordnung, wobei das Verfahren die folgenden Schritte umfasst:
Bereitstellen des Systems nach einem der Ansprüche 1 bis 12;
Betreiben des ersten Lüfters (11), um Luft über den Einlass (9) in das Gehäuse (7) einzuleiten; und
Betreiben des zweiten Lüfters (15), um Luft über den Auslass (13) aus dem Gehäuse (7) abzusaugen.

## Revendications

1. - Système de collecte de particules d'ensemble frein à disque, comprenant :
un ensemble frein à disque ;
un récipient (7) entourant l'ensemble frein à disque, le récipient (7) comprenant une entrée (9) et une sortie (13) ; et
un premier ventilateur (11) configuré pour introduire de l'air dans le récipient (7) par l'entrée (9) ;
**caractérisé par** un second ventilateur (15) configuré pour aspirer de l'air hors du récipient (7) par la sortie (13), le second ventilateur (15) comprenant un ventilateur sans pales.

2. - Système de collecte de particules d'ensemble frein à disque selon la revendication 1, dans lequel le récipient (7) comprend une unité scellée.

3. - Système de collecte de particules d'ensemble frein à disque selon la revendication 1 ou la revendication 2, dans lequel le premier ventilateur (11) comprend un ventilateur sans pales.

4. - Système de collecte de particules d'ensemble frein à disque selon l'une quelconque des revendications précédentes, comprenant en outre un compresseur configuré pour produire un courant de gaz comprimé, le ventilateur sans pales étant disposé pour recevoir le courant de gaz comprimé et éjecter le courant de gaz comprimé sur une surface Coand 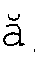 , le ventilateur sans pales étant configuré pour entraîner de l'air ambiant provenant d'une entrée de ventilateur avec le courant de gaz comprimé éjecté afin de produire un courant de gaz amplifié.

5. - Système de collecte de particules d'ensemble frein à disque selon la revendication 4, dans lequel le compresseur comprend simplement une entrée de compresseur disposée pour collecter de l'air en provenance de l'avant d'un véhicule de telle sorte que la pression dynamique d'un mouvement de véhicule fournira de l'air à haute pression.

6. - Système de collecte de particules d'ensemble frein à disque selon la revendication 4 ou la revendication 5, dans lequel le compresseur comprend une pompe pour fournir de l'air.

7. - Système de collecte de particules d'ensemble frein à disque selon la revendication 6, dans lequel la pompe est entraînée électriquement, reliée mécaniquement au vilebrequin et/ou aux pales de rotor du véhicule, et/ou entraînée par un turbo.

8. - Système de collecte de particules d'ensemble frein à disque selon l'une quelconque des revendications 4 à 7, comprenant en outre un dispositif de commande configuré pour commander un apport du courant d'air comprimé.

9. - Système de collecte de particules d'ensemble frein à disque selon la revendication 8, comprenant en outre un capteur de température configuré pour surveiller une température de l'ensemble disque de frein, et dans lequel le dispositif de commande est configuré pour commander un apport du courant d'air comprimé en réponse à cela.

10. - Système de collecte de particules d'ensemble frein à disque selon la revendication 8 ou la revendication 9, comprenant en outre un capteur de freinage configuré pour surveiller un freinage de véhicule, et dans lequel le dispositif de commande est configuré pour commander un apport du premier courant d'air comprimé en réponse à cela.

11. - Système de collecte de particules d'ensemble frein à disque selon l'une quelconque des revendications 4 à 10, dans lequel le courant de gaz comprimé a une température au-dessous de la température ambiante.

12. - Système de collecte de particules d'ensemble frein à disque selon l'une quelconque des revendications 4 à 11, dans lequel le ventilateur comprend en outre un tamis pour filtrer l'air ambiant avant qu'il ne soit entraîné par le ventilateur sans pales.

13. - Véhicule comprenant le système selon l'une quelconque des revendications précédentes.

14. - Procédé de collecte de particules à partir d'un ensemble frein à disque, le procédé comprenant les étapes consistant à :
fournir le système selon l'une quelconque des revendications 1 à 12 ;
actionner le premier ventilateur (11) pour introduire de l'air dans le récipient (7) par l'entrée (9) ; et
actionner le second ventilateur (15) pour aspirer de l'air hors du récipient (7) par la sortie (13).
